# EUROPÄISCHE PATENTANMELDUNG

(11) **EP 2 672 113 A2**
(43) Veröffentlichungstag der Anmeldung: **11.12.2013**
(21) Anmeldenummer: 13167823.7
(22) Anmeldetag: 15.05.2013
(51) Int. Cl.: F03D 11/00

(54) **Vorrichtung zum Erfassen eines Eisbelags auf den Rotorblättern einer Windturbine**

(30) Priorität: 05.06.2012 AT 502212012
(71) Anmelder: Hainzl Industriesysteme GmbH, 4020 Linz (AT)
(72) Erfinder: Buchegger, Thomas, 4407 Dietach (AT); Hesch, Clemens, 4020 Linz (AT)
(74) Vertreter: Hübscher, Helmut

(57) **Zusammenfassung**

Es wird eine Vorrichtung zum Erfassen eines Eisbelags auf den Rotorblättern (5) einer Windturbine (1) mit einer Sende- und Empfangseinrichtung aus einerseits auf den Rotorblättern (5) und anderseits stationär angeordneten, miteinander über eine drahtlose Übertragungsstrecke verbundenen Teilen und mit einer an die Sende- und Empfangseinrichtung angeschlossenen Auswerteschaltung (9) beschrieben. Um vorteilhafte Konstruktionsbedingungen zu schaffen, wird vorgeschlagen, dass die Sende- und Empfangseinrichtung passive Transponder (6) auf den Rotorblättern (5) und wenigstens eine stationäre Leseeinheit (7) für die Transponder (6) umfasst und dass die Auswerteschaltung (9) eine Vergleicherstufe (10) für die zum sicheren Lesen der Transponder (6) erforderliche minimale Sendeleistung der Leseeinheit (7) mit einem vorgebbaren Schwellwert dieser Sendeleistung beim Auftreten eines Eisbelags aufweist.

## Beschreibung

Die Erfindung bezieht sich auf eine Vorrichtung zum Erfassen eines Eisbelags auf den Rotorblättern einer Windturbine mit einer Sende- und Empfangseinrichtung aus einerseits auf den Rotorblättern und anderseits stationär angeordneten, miteinander über eine drahtlose Übertragungsstrecke verbundenen Teilen und mit einer an die Sende- und Empfangseinrichtung angeschlossenen Auswerteschaltung.

Abgesehen von der Zusatzbelastung der Rotorblätter einer Windturbine durch einen Eisbelag verändert ein solcher Eisbelag, der sich insbesondere im Anströmungsbereich der Rotorblätter bildet, das Strömungsprofil, sodass mit einer Verschlechterung des Wirkungsgrads der Windturbine zu rechnen ist. Für den Betrieb von Windturbinen hat die Überwachung der Rotorblätter auf eine allfällige Eisbildung somit eine erhebliche Bedeutung. Zur Überwachung der Rotorblätter hinsichtlich einer Vereisung sind unterschiedliche Maßnahmen bekannt, so wurde bereits vorgeschlagen (DE 10 2005 016 524 A1), neben den meteorologischen Bedingungen im Zusammenhang mit einer Vereisungsgefahr die sich mit einem Eisbelag ändernden Massenverhältnisse der Rotorblätter zu erfassen, beispielsweise über die an den Blattwurzeln auftretenden Biegemomente, was nicht nur aufwendig ist, sondern erst Messergebnisse liefert, wenn aufgrund einer erheblichen Eisbildung sich die Massenverhältnisse für eine Erfassung ausreichend ändern.

Eine andere Möglichkeit besteht darin (DE 10 2006 032 387 A1), die Eisbildung optisch mit Hilfe von Laserstrahlen zu erfassen, die entlang der zur Eisbildung neigenden Oberfläche der Rotorblätter ausgerichtet sind und aufgrund der Wechselwirkung mit auf der Oberfläche ausgebildetem Eis einen Parameter für die Eisbildung darstellen können. Nachteilig ist wiederum die relative Unempfindlichkeit der Erfassung eines entstehenden Eisfilms. Außerdem sind mit Energie versorgbare Konstruktionselemente auf den Rotorflügeln vorzusehen.

Bei einem weiteren bekannten Verfahren zur Überwachung der Eisbildung auf Rotorblättern (DE 10 2005 017 054 A1) wird das Schwingungsverhalten der Rotorblätter überwacht, das sich bei der Eisbildung ändert. Zu diesem Zweck wird der Körperschall der Rotorblätter zumindest in ausgewählten Frequenzbereichen an verschiedenen Stellen gemessen und auf charakteristische Veränderungen für die Erfassung einer Eisbildung überwacht. Auch hier ist mit einem vergleichsweise hohen konstruktiven Aufwand zu rechnen.

Zur Überwachung des sich bei einem Wasser- oder Eisbelag ändernden Schwingungsverhaltens der Rotorblätter einer Turbine ist es auch bekannt (DE 4023982 A1), auf den Rotorblättern elektrische Schwingkreise vorzusehen, die über einen stationären Schwingungsgenerator zu Resonanzschwingungen angeregt werden, um aufgrund der erfassten Veränderung der Güte dieser Schwingkreise auf Wasser- oder Eisbeläge rückschließen zu können.

Damit Daten von einem Rotorblatt einer Windturbine drahtlos erfasst werden können, ist es darüber hinaus bekannt (DE 10 2007 001 507 A1), auf den Rotorblättern passive Transponder vorzusehen, die über ein stationäres Abfragegerät ausgelesen werden können. Fällt einer der Transponder beispielsweise durch einen Blitzschlag aus, so kann dies über das Abfragegerät erfasst werden, das dann eine entsprechende Warnung ausgibt. Transponder werden aber auch auf Rotorblättern von Windturbinen eingesetzt, um die einzelnen Positionen der mit den Transpondern versehenen Stellen der Rotorblätter erfassen und damit auf die ordnungsgemäße Funktion der Rotorblätter rückschließen zu können. In allen diesen Fällen werden die Transponder zur drahtlosen Übertragung von Daten genützt, die jedoch keinen Rückschluss auf eine Eisbildung erlauben.

Der Erfindung liegt somit die Aufgabe zugrunde, eine Vorrichtung zur Überwachung von Rotorblättern einer Windturbine auf die Ausbildung eines Eisbelags so auszugestalten, dass mit einfachen konstruktiven Mitteln eine sichere Erfassung eines Eisbelags möglich wird, ohne auf den Rotorblättern Energiequellen vorsehen zu müssen.

Ausgehend von einer Vorrichtung der eingangs geschilderten Art zum Erfassen eines Eisbelags auf den Rotorblättern einer Windturbine löst die Erfindung die gestellte Aufgabe dadurch, dass die Sende- und Empfangseinrichtung passive Transponder auf den Rotorblättern und wenigstens eine stationäre Leseeinheit für die Transponder umfasst und dass die Auswerteschaltung eine Vergleicherstufe für die zum sicheren Lesen der Transponder erforderliche minimale Sendeleistung der Leseeinheit mit einem vorgebbaren Schwellwert dieser Sendeleistung beim Auftreten eines Eisbelags aufweist.

Die Erfindung geht von der Erkenntnis aus, dass bei der Überdeckung eines passiven Transponders mit einer Eisschicht das von der Leseeinrichtung abgestrahlte elektrische Feld gedämpft wird, sodass aufgrund einer solchen Dämpfung ein allfälliger Eisbelag sicher erfasst werden kann. Hierfür braucht ja lediglich ein Schwellwert für die beim Auftreten eines Eisbelags für das Ansprechen des passiven Transponders erforderliche Sendeleistung festgelegt zu werden, um zu überprüfen, ob die für ein sicheres Lesen der Transponder erforderliche minimale Sendeleistung der Leseeinrichtung unterhalb oder oberhalb dieses Schwellwerts liegt. Liegt die zum sicheren Lesen der Transponder erforderliche minimale Sendeleistung der Leseeinrichtung unter dem vorgegebenen Schwellwert, so kann keine den Schwellwert bestimmende Eisbildung vorliegen. Erreicht die zum sicheren Lesen der Transponder erforderliche minimale Sendeleistung den vorgegebenen Schwellwert, so liegt im Bereich der Transponder ein entsprechender Eisbelag vor. Der Schwellwert kann im einfachsten Fall empirisch festgelegt und in Abhängigkeit von der Empfindlichkeit der jeweils geforderten Überwachung gewählt werden. Da die Energie zum Lesen der passiven Transponder über das von der Leseeinheit gesendete elektrische Feld an die Transponder übertragen wird, die erst beim Empfang einer ausreichenden elektrischen Energie ansprechen, ergeben sich einfache Konstruktionsverhältnisse, zumal entsprechende passive Transponder ohne Schwierigkeiten an den für eine Eisbildung empfindlichen Stellen der Rotorblätter angebracht werden können.

Um eine feinfühlige Überwachung der Eisbildung auf den Rotorblättern einer Windturbine zu gewährleisten, kann die Sendeleistung der Leseeinheit über eine Steuereinrichtung in Abhängigkeit vom Ansprechen der Transponder zumindest stufenweise vergrößert werden, sodass die für das Auslesen der Transponder zur Verfügung zu stellende minimale Sendeleistung der Leseeinheit sicher erfasst werden kann. Es bedarf daher lediglich einer geeigneten Auswerteschaltung, um die beim Ansprechen der Transponder erfasste Sendeleistung der Leseeinheit in einer Vergleicherstufe mit dem vorgegebenen Schwellwert dieser Sendeleistung beim Auftreten eines Eisbelags zu vergleichen und davon abhängig eine Eisbildung anzuzeigen.

In der Zeichnung ist der Erfindungsgegenstand beispielsweise dargestellt. Es zeigen
- Fig. 1: eine Windturbine mit einer erfindungsgemäßen Vorrichtung zum Erfassen eines Eisbelags auf den Rotorblättern in einer schematischen Ansicht und
- Fig. 2: eine solche erfindungsgemäße Vorrichtung in einem schematischen Blockschaltbild.

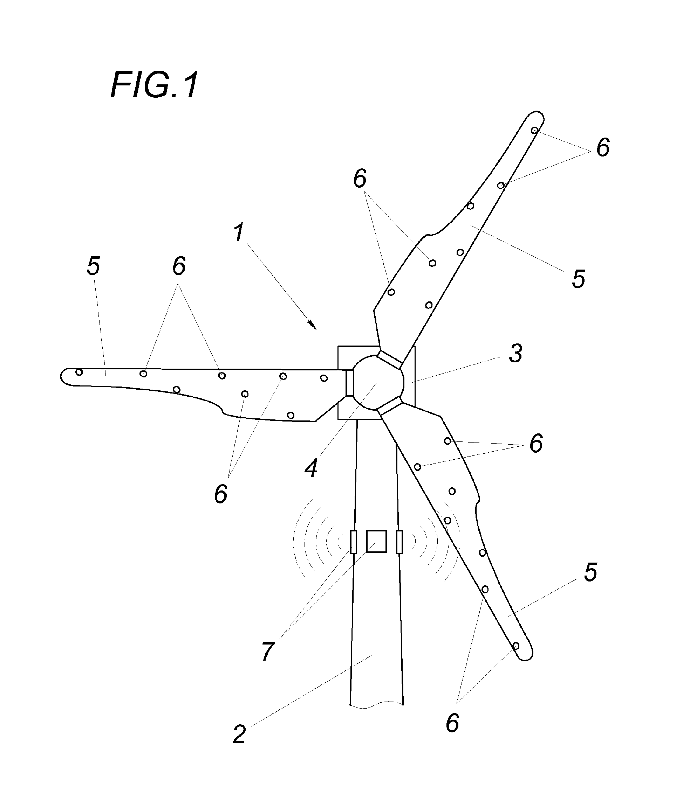

Aus der Fig. 1 ist eine Windturbine 1 auf einem Ständer 2 zu entnehmen, der ein um eine vertikale Achse drehbar gelagertes Gehäuse 3 für den Turbinenrotor 4 trägt. Die Rotorblätter 5 sind mit passiven Transpondern 6 versehen, die über die für eine Vereisung anfälligen Oberflächenbereiche der Rotorblätter 5 verteilt angeordnet sind. Zum Lesen dieser Transponder 6 sind über den Umfang des Ständers 2 verteilte Leseeinheiten 7 vorgesehen, um die Ausrichtung des Turbinenrotors 4 gegenüber dem Wind zu berücksichtigen und für jede Drehstellung des Gehäuses 3 gegenüber dem Ständer 2 ein Lesen der Transponder 6 über zumindest eine der Leseeinheiten 7 sicherzustellen.

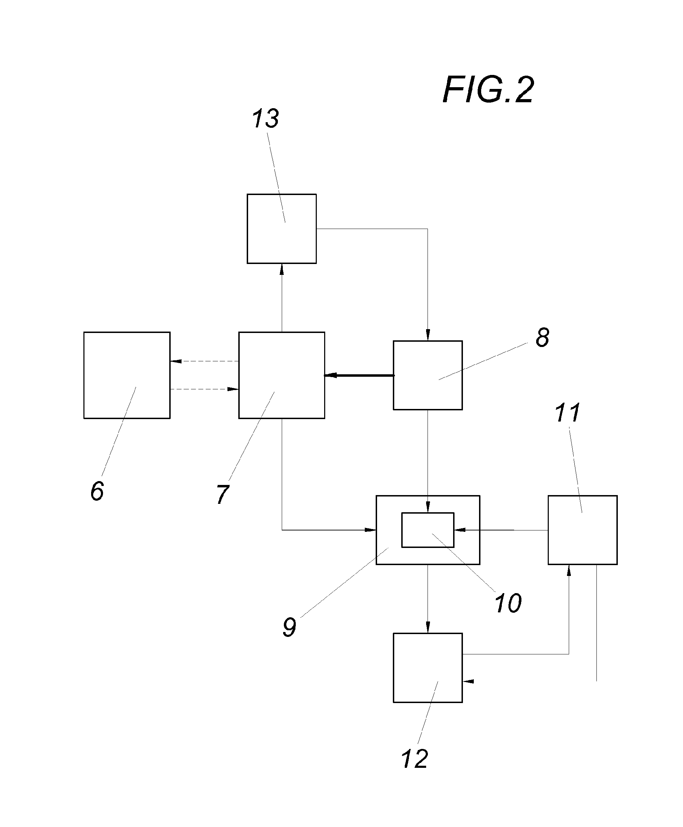

Gemäß der Fig. 2 wird jede Leseeinheit 7 über eine Leistungsstufe 8 mit elektrischer Energie beaufschlagt, die die für das Lesen der passiven Transponder 6 erforderliche, minimale Sendeleistung zur Verfügung stellt. Diese zum sicheren Lesen der Transponder 6 erforderliche minimale Sendeleistung wird in einer Auswerteschaltung 9 zur Erfassung eines allfälligen Eisbelags im Bereich eines der Transponder 6 ausgewertet, indem diese minimale Sendeleistung zum sicheren Lesen des Transponders 6 in einer Vergleicherstufe 10 der Auswerteschaltung 9 mit einem in einem Speicher 11 abgespeicherten Schwellwert verglichen wird, der jener minimalen Sendeleistung entspricht, die zum Lesen des Transponders 6 bei einem zumindest zu erfassenden Eisbelag erforderlich ist. Liegt die jeweilige für das Ansprechen der Transponder 6 notwendige Sendeleistung unter diesem Schwellwert, so liegt kein zu erfassender Eisbelag vor. Beim Überschreiten dieses Schwellwertes ist jedoch ein zu berücksichtigender Eisbelag vorhanden, was in der an die Auswerteschaltung 9 angeschlossenen Anzeige- und Eingabestufe 12 ausgewiesen wird. Über diese Anzeige- und Eingabestufe 12 kann der jeweilige Schwellwert der Sendeleistung in den Speicher 11 eingelesen werden.

Kann bei einer über die Leistungsstufe 8 eingestellten Sendeleistung der Leseeinheit 7 der Transponder 6 nicht gelesen werden, so wird die Sendeleistung über die Leistungsstufe 8 zumindest stufenweise erhöht. Zu diesem Zweck wird über die Leseeinheit 7 eine Steuereinrichtung 13 beaufschlagt, die die Leistungsstufe 8 im Sinne einer Leistungserhöhung für die Leseeinheit 7 ansteuert. Reicht diese Sendeleistung für das Auslesen des passiven Transponders 6 aus, so wird die an die Leseeinheit 7 angeschlossene Auswerteschaltung 9 mit dem Ist-Wert dieser Sendeleistung beaufschlagt, um über den Vergleich mit dem vorgegebenen Schwellwert dieser Leistung eine allfällige Eisbildung beurteilen zu können. Kann der Transponder 6 noch nicht gelesen werden, so wird über die Steuereinrichtung 13 die Sendeleistung weiter erhöht, bis der passive Transponder 6 anspricht und gelesen werden kann.

Für die Erfassung einer Eisbildung auf den Rotorblättern 5 genügt es, eine Kennung der einzelnen Transponder 6 zu lesen, weil über die Transponderkennung die Lage der Transponder 6 auf dem jeweiligen Rotorblatt 5 bestimmt werden kann, sodass eine beginnende Vereisung des Rotorblattes 5 örtlich erfassbar wird, wenn das Rotorblatt 5 an der jeweiligen stationären Leseeinheit 7 vorbeibewegt wird. Aufgrund der Beschränkung der Übertragungsstrecke zufolge des Einsatzes passiver Transponder 6 wird es unter Umständen notwendig, mehrere über die Höhe des Ständers 2 verteilte Leseeinheiten 7 für die über die Rotorblätter 5 verteilten Transponder 6 vorzusehen.

## Patentansprüche

1. Vorrichtung zum Erfassen eines Eisbelags auf den Rotorblättern (5) einer Windturbine (1) mit einer Sende- und Empfangseinrichtung aus einerseits auf den Rotorblättern (5) und anderseits stationär angeordneten, miteinander über eine drahtlose Übertragungsstrecke verbundenen Teilen und mit einer an die Sende- und Empfangseinrichtung angeschlossenen Auswerteschaltung (9), **dadurch gekennzeichnet, dass** die Sende- und Empfangseinrichtung passive Transponder (6) auf den Rotorblättern (5) und wenigstens eine stationäre Leseeinheit (7) für die Transponder (6) umfasst und dass die Auswerteschaltung (9) eine Vergleicherstufe (10) für die zum sicheren Lesen der Transponder (6) erforderliche minimale Sendeleistung der Leseeinheit (7) mit einem vorgebbaren Schwellwert dieser Sendeleistung beim Auftreten eines Eisbelags aufweist.

2. Vorrichtung nach Anspruch 1, **dadurch gekennzeichnet, dass** die Sendeleistung der Leseeinheit (7) über eine Steuereinrichtung (13) in Abhängigkeit vom Ansprechen der Transponder (6) zumindest stufenweise vergrößerbar ist.
